# EUROPÄISCHE PATENTSCHRIFT

(11) **EP 0 554 547 B1**
(45) Veröffentlichungstag und Bekanntmachung des Hinweises auf die Patenterteilung: **08.05.1996**
(21) Anmeldenummer: 92121221.3
(22) Anmeldetag: 12.12.1992
(51) Int. Cl.: B24B 5/42, B23Q 1/72

(54) **Verfahren zum Schleifen von Hublagerzapfen einer Kurbelwelle und Schleifmaschine hierfür**
Method for grinding crank shaft pins and machine therefor
Procédé pour la rectification de manetons de vibrequin et rectifieuse pour ce faire

(30) Priorität: 30.01.1992 DE 4202513
(43) Veröffentlichungstag der Anmeldung: 11.08.1993
(73) Patentinhaber: NAXOS-UNION Schleifmittel- und Schleifmaschinenfabrik Aktiengesellschaft, D-60386 Frankfurt (DE)
(72) Erfinder: Lehmann, Dieter, c/o KEIL & SCHAAFHAUSEN, W-6000 Frankfurt am Main 1 (DE)
(74) Vertreter: Keil, Rainer A., Dipl.-Phys. Dr.

(56) Entgegenhaltungen:
- DE-A- 2 208 593
- DE-A- 3 121 609
- GB-A- 2 072 063
- US-A- 1 925 911

## Beschreibung

Die Erfindung betrifft ein Verfahren zum aufeinanderfolgenden Schleifen von Hublagerzapfen nach dem Oberbegriff des Anspruchs 1 sowie eine Schleifmaschine insbesondere zur Durchführung eines derartigen Verfahrens.

Bei einem bekannten verfahren zum Schleifen von Hublagerzapfen wird die Kurbelwelle an ihren beiden äußersten Mittellagern in Spannköpfen von Werkstückspindelstöcken exzentrisch eingespannt und die Hublagerzapfen werden nacheinander mit einer Schleifscheibe geschliffen. Bei solchen Schleifvorgängen ist das Biegeverhalten der lediglich an ihren beiden Enden eingespannten Kurbelwelle problematisch, wenn die Kurbelwelle eine bestimmte Länge und/oder ein bestimmtes Gewicht überschreitet. Die sich aufgrund ihres Eigengewichts ergebende Durchbiegung der Kurbelwelle hat eine elastische Verformung im Bereich der zu schleifenden Hublagerzapfen zur Folge, welche die Einhaltung der geforderten Rundheits- und Breitentoleranzen nicht gestattet. Auch die für eine optimale Verbrennung im Zylinder erforderliche exakte Kolbenhubhöhe kann mit in diesen Fällen ungenau geschliffenen Hublagerzapfen nicht erreicht werden. Zur Verringerung der Maßabweichungen infolge Durchbiegung wird daher bei dem bekannten Verfahren jeweils der zu schleifende Hublagerzapfen während des Schleifens mittels eines gesonderten Setzstocks abgestützt, der einen Teil des Werkstückgewichts aufnimmt. Derartige Setzstöcke sind jedoch aufwendig zu montieren und können die Wellendurchbiegung nur teilweise kompensieren. Insbesondere in der Großserienfertigung ist man daher dazu übergegangen, die Hublagerzapfen der Kurbelwellen nacheinander auf mehreren unterschiedlichen Schleifmaschinen zu schleifen, wobei jeweils nur der dem der Einspannung dienende Mittellagerzapfen innen unmittelbar benachbarte Hublagerzapfen geschliffen wird. Das Schleifen erfolgt gleichzeitig mit zwei Schleifscheiben beginnend mit den beiden äußeren Hublagerzapfen unmittelbar neben den Spannstellen. Die sich nach innen anschließenden nächsten beiden Hublagerzapfen müssen auf einer weiteren Maschine geschliffen werden, wobei die Kurbelwelle an den den zu schleifenden Hublagerzapfen außen unmittelbar benachbarten Mittellagern eingespannt wird etc.. Ein Setzstock ist nicht erforderlich, da die unmittelbar neben den zu schleifenden Hublagerzapfen angreifenden Einspannköpfe jeweils eine ausreichende Abstützung gewährleisten. Bei einem derartigen Verfahren sind bspw. für die Produktion einer sechshübigen Kurbelwelle alleine drei Doppelscheiben-Schleifmaschinen erforderlich. Dies läßt sich allenfalls für Großserien rechtfertigen, ist für geringere Stückzahlen aber nicht rentabel.

Die DE-AS 22 08 593 beschreibt ein Verfahren zum Bearbeiten der Lagerstellen einer Kurbelwelle, bei dem die Bearbeitung der Lagerstellen von einem zum anderen Ende der Kurbelwelle nacheinander und fortschreitend erfolgt und die Kurbelwelle bei der Bearbeitung jeder Lagerstelle u.a. an der dieser benachbarten zuvor bearbeiteten Lagerstelle eingespannt wird. Dabei besteht die von einem zum anderen Kurbelwellenende nacheinander fortschreitend erfolgende Bearbeitung in der gleichzeitigen Bearbeitung eines Lagerstellenpaares, das ein Hubzapfen- und ein Mittellager umfaßt. Begonnen wird die Bearbeitung der Lagerstellen an einem einem Ende der Kurbelwelle benachbarten Lagerstellenpaar und schreitet paarweise zu dem anderen Ende der Kurbelwelle fort. Dabei ist die Kurbelwelle an ihrem ersten Ende fest eingespannt, während das andere Ende der Kurbelwelle nicht eingespannt ist und sich radial bewegen kann. Gerade bei größeren und schwereren Kurbelwellen besteht jedoch aufgrund der freien Beweglichkeit des einen Wellenendes die Gefahr, daß die Lagerstellen ungleichmäßig geschliffen werden. Zwischen zwei Schleifvorgängen wird die Klemmvorrichtung zum nächsten Mittellager bewegt, während die Kurbelwelle, an ihrem Endlager eingespannt, in ihrer ursprünglichen Position verbleibt. Da die Einspannung beim nächsten Schleifvorgang an dem zuvor geschliffenen Mittellager erfolgt, kann es zu einer zunehmenden Verstärkung eventueller Fehler kommen. Durch die zentrische Einspannung der Kurbelwelle an ihrem Endlager läuft der zu schleifende Hublagerzapfen auf einer Kreisbahn um, so daß das Schleifwerkzeug der Bewegung des Hublagerzapfens axial hin- und herpendelnd folgen muß. Dadurch wird die Steuerung der Schleifmaschine aufwendiger. Auch ist bei einem während des Schleifvorgangs umlaufenden Hublagerzapfen die Genauigkeit des Schleifvorgangs schwieriger zu gewährleisten, da eine Durchmesser- und/oder Rundheitsmessung nur mit erhöhtem Aufwand durchführbar ist.

Aus der DE-A-31 21 609 ist eine Schleifmaschine für Hublager von schweren Kurbelwellen bekannt, bei welcher die Kurbelwelle beidseitig in drehbaren Aufnahmen exzentrisch aufnehmbar ist und der zu schleifende Hublagerzapfen in der Drehmitte der Aufnahme liegt und mit einem Schleifspindelstock einer Rundschleifmaschine schleifbar ist. Da die Kurbelwelle aber nur an ihren Endlagern eingespannt ist, kommt es aufgrund ihres Eigengewichts zu einer Durchbiegung und zu einer elastischen Verformung im Bereich des zu schleifenden Hublagerzapfens. Um dieser Durchbiegung der Kurbelwelle entgegenzuwirken, ist in der DE-A 31 21 609 vorgeschlagen, eine Entlastungseinrichtung mit einem Entlastungsbügel für die Aufnahme des abzustützenden Lagers vorzusehen, dessen Aufhängepunkt im wesentlichen senkrecht über dem Lagersitz synchron mit gleicher Exzentrizität wie der Lagersitz umläuft. Mit einer derartigen Anordnung kann jedoch, ähnlich wie mit den oben erwähnten Setzstöcken die Durchbiegung der Kurbelwelle nur teilweise kompensiert werden. Den insbesondere in der Automobilindustrie gestellten hohen Anforderungen an die Fertigungsgenauigkeit kann mit einer derartigen Einrichtung nicht genügt werden. Zudem ist sie relativ aufwendig zu montieren, so daß auch die Werkzeugkosten erhöht werden.

Aufgabe der Erfindung ist es daher, ausreichend geringe Fertigungstoleranzen mit geringerem maschinellen Aufwand zu ermöglichen.

Diese Aufgabe wird mit der Erfindung im wesentlichen durch die Merkmale des Anspruchs 1 gelöst. Dabei wird durch die unmittelbar neben den zu schleifenden Hublagerzapfen erfolgende Einspannung eine einwandfreie Abstützung der Kurbelwelle gewährleistet, so daß die Durchbiegung des zu schleifenden Hublagerzapfens innerhalb des akzeptablen Toleranzbereichs liegt. Zusätzliche Unterstützungsmaßnahmen, wie SetzstÖcke, sind nicht erforderlich. Sämtliche Hublagerzapfen einer Kurbelwelle können auf ein und derselben Schleifmaschine geschliffen werden, und zwar mit hoher Genauigkeit auch bei großen Kurbelwellen, wie solchen für Lastkraftwagen. Durch eine sehr steife Werkstückführung und konstante Schleifverhältnisse an allen Hublagerzapfen wird vor allem die besondere wichtige Hubhöhentoleranz deutlich verbessert. Weitere Fortschritte werden bei der Rundheit und der Zylindrizität erzielt. Insgesamt wird mit dem erfindungsgemäßen Verfahren die für den Betrieb eines Motors so wesentliche Lage der Hublagerzapfen zu den jeweils benachbarten Mittellagern besser beherrscht als mit herkömmlichen Schleiftechniken.

Um die Zahl der Einspannlagen der Kurbelwelle und damit die Fertigungszeit möglichst gering zu halten, ist in Ausgestaltung der Erfindung vorgesehen, daß in einer Einspannlage der Kurbelwelle jeweils zwei Hublagerzapfen geschliffen werden.

Vorzugsweise wird die Kurbelwelle aus einer (ersten) Einspannlage axial lediglich um den Mittenabstand zweier benachbarter Hublagerzapfen bzw. Mittellagerzapfen in eine (weitere) Einspannlage axial umgesetzt. Dadurch wird der zwischen den Einspannlagen zurückzulegende Weg möglichst klein gehalten, was zu einer weiteren Reduzierung der Fertigungszeiten führt.

Um eine axial genaue Ausrichtung zwischen Schleifscheibe und Kurbelwelle zu erreichen, wird die Kurbelwelle zweckmäßigerweise nach Grobpositionierung durch Einlegen in die (erste) Einspannlage bzw. Umsetzen in eine (weitere) Einspannlage axial bezüglich der Schleifscheibe und radial bezüglich der jeweiligen Drehachse justiert.

Vorzugsweise wird dabei die axiale Einspannlage der Kurbelwelle an den Schultern des jeweils zu schleifenden Hublagerzapfens abgetastet.

Um sicherzustellen, daß der zu schleifende Hublagerzapfen sich in der Drehmitte der Schleifmaschine befindet, wird die Kurbelwelle erfindungsgemäß nach Einlegen in die (erste) Einspannlage in die bezogen auf den ersten zu schleifenden Hublagerzapfen richtige Drehlage überführt (geteilt) und vor dem Schleifen des jeweils weiteren Hublagerzapfens durch Vergleich mit dem zuerst geschliffenen Hublagerzapfen in die richtige Drehlage überführt (geteilt). Durch den jeweiligen Bezug auf den ersten zu schleifenden Hublagerzapfen werden Summenfehler in der Teilung vermieden.

Um die erforderliche Genauigkeit in möglichst kurzer Fertigungszeit zu erreichen, ist in Weiterbildung der Erfindung vorgesehen, daß die Schleifscheibe zunächst im Eilgang in eine Vorposition an die Kurbelwelle herangefahren, dann die Zustellgeschwindigkeit vom Anschleifen des Hublagerzapfens stufenweise bis zum Fertigdurchmesser des Hublagerzapfens reduziert und zuletzt die Schleifscheibe im Eilgang in die Ausgangsstellung zurückgeführt wird.

Dabei hat es sich als zweckmäßig erwiesen, daß die Kurbelwelle in Anpassung an die Zustellgeschwindigkeit der Schleifscheibe mit unterschiedlicher Drehzahl gedreht wird.

Um die Kurbelwelle sicher zu transportieren, wird diese erfindungsgemäß zum Einlegen und axialen Umsetzen von einer Einspannlage in die nächste an drei Mittellagerzapfen eingeklemmt.

Damit durch Abnutzung der Schleifscheibe keine Qualitätsverluste entstehen können, wird die Schleifscheibe vorzugsweise während des Schleifprozesses in zyklischen Abständen zur Wiederherstellung der vorgegebenen Geometrie des Schleifscheibenprofils abgerichtet.

Die Erfindung bezieht sich auch auf eine Schleifmaschine mit den Merkmalen des Anspruchs 12.

Um ein definiertes Versetzen der Kurbelwelle zu ermöglichen, entspricht bei einer Schleifscheibe zum Schleifen einer Kurbelwelle mit n Hublagerzapfen und n + 1 Mittellagerzapfen der Mittenabstand der Einspannköpfe dem 1- bis (n - 1)-fachen Abstand zweier benachbarter Hublagerzapfen bzw. Mittellagerzapfen.

Um die Bedienung der Schleifmaschine zu erleichtern bzw. die Schleifmaschine weitgehend zu automatisieren, weist diese in Weiterbildung der Erfindung eine Einrichtung zum axialen Umsetzen der Kurbelwelle aus einer (ersten) Einspannlage um wenigstens den Mittenabstand zweier benachbarter Hublagerzapfen bzw. Mittellagerzapfen in eine (weitere) Einspannlage der Kurbelwelle auf.

Um einen sicheren Transport der Kurbelwelle zu gewährleisten, klemmt die Umsetzeinrichtung erfindungsgemäß die Kurbelwelle zwischen drei Mittellagerzapfen ein.

Der notwendige maschinelle Aufwand wird erfindungsgemäß dadurch weiter verringert, daß die Umsetzeinrichtung auch dem Einlegen der Kurbelwelle in die erste Einspannlage und dem Ausheben der Kurbelwelle aus der letzten Einspannlage dient.

Eine genaue axiale Ausrichtung von Kurbelwelle und Schleifscheibe wird bei einer Ausgestaltung der Erfindung dadurch erreicht, daß die axiale Einspannlage der Kurbelwelle grob durch die Einspannköpfe und die Mittellagerzapfen bestimmt wird und mittels einer Axialpositioniereinrichtung einjustierbar ist.

Zweckmäßigerweise tastet die Axialpositioniereinrichtung die axiale Einspannlage der Kurbelwelle an den Schultern des zu schleifenden Hublagerzapfens ab und positioniert die Kurbelwelle durch Verfahren des Werkstücktisches axial.

Bei einer bevorzugten Ausgestaltung der Erfindung ist die Kurbelwelle mittels der Umsetzeinrichtung in eine definierte Drehlage bezüglich des ersten zu schleifenden Hublagerzapfens in die erste Einspannlage einlegbar.

Zweckmäßigerweise ist die radiale Einspannlage der Kurbelwelle mittels einer Kontrolleinrichtung überwachbar und justierbar.

Bei einer herkömmlichen Schleifmaschine erfolgt das Überführen der zu schleifenden Hublagerzapfen in die richtige Drehlage über eine koaxiale Teileinrichtung, welche die Kurbelwelle über ein Drehen der Einspannköpfe oder in den Einspannköpfen positioniert. Bei einer erfindungsgemäßen Schleifmaschine ist aufgrund der axial versetzten Einspannlagen eine derartige koaxiale Teilvorrichtung nicht mehr zweckmäßig. Bei einer bevorzugten Weiterbildung der Erfindung weist daher die Schleifmaschine eine Teilvorrichtung auf, welche an dem zu schleifenden Hublagerzapfen angreift und die Kurbelwelle bezüglich des zu schleifenden Hublagerzapfens in Schleifposition dreht.

Um Summenfehler bei der Teilung zu vermeiden ist erfindungsgemäß vorgesehen, daß für die Einjustierung der Schleifposition eines Hublagerzapfens der zuerst geschliffene Hublagerzapfen als Referenz dient.

Eine schnelle und trotzdem genaue Bearbeitung der Kurbelwelle wird erfindungsgemäß dadurch ermöglicht, daß die Schleifmaschine eine Einrichtung zum radialen Zustellen der Schleifscheibe an die eingespannte Kurbelwelle mit unterschiedlichen Geschwindigkeiten aufweist. Dadurch ist die Grobbearbeitung mit einem relativ großen Vorschub möglich, während die Annäherung an den Fertigdurchmesser langsam und mit hoher Genauigkeit erfolgen kann.

Zweckmäßigerweise ist die Kurbelwelle mit unterschiedlichen Drehzahlen antreibbar, so daß sie den ggf. unterschiedlichen Vorschubgeschwindigkeiten der Schleifscheibe angepaßt werden kann.

Um Qualitätsverluste durch Abnutzung der Schleifscheibe zu vermeiden, ist erfindungsgemäß eine Einrichtung zum Abrichten der Schleifscheibe vorgesehen.

Um den Schleifprozeß nicht unterbrechen zu müssen und das Schleifende genau bestimmen zu können, weist die Schleifmaschine vorzugsweise eine Einrichtung für die Messung des Durchmessers eines Hublagerzapfens während des Schleifens auf.

Um den Arbeitsraum der Schleifmaschine für das Einlegen, Umsetzen und Herausnehmen der Kurbelwelle möglichst freizuhalten, sind zweckmäßigerweise die Durchmessermeßeinrichtung, die Axialpositioniereinrichtung und/oder die Teileinrichtung mittels eines Schwenkschlittens aus einer Wartestellung in die Arbeitsstellung an der Kurbelwelle überführbar.

Ein Verschieben des Werkzeugtisches gegenüber der Schleifscheibe wird zuverlässig dadurch verhindert, daß der Werkzeugtisch während des Schleifens, vorzugsweise hydraulisch, festklemmbar ist.

In Ausgestaltung der Erfindung sind die Einspannköpfe während des Einlegens, des Umsetzens und/oder des Teilens der Kurbelwelle fixierbar.

Um ein freies Drehen der Kurbelwelle zum Zwecke des Teilens zu ermöglichen, ist erfindungsgemäß die Einspannung der Kurbelwelle während des Teilens lösbar.

Ein wenig Bedienungspersonal erforderndes aber dennoch zuverlässiges und genaues Arbeiten der Schleifmaschine wird vorzugsweise durch eine numerische Steuerung (CNC) erreicht, welche die einzelnen Einrichtungen der Schleifmaschine in der richtigen Folge und in richtigem Zeitablauf in Funktion setzt.

Weiterbildungen, Vorteile und Anwendungsmöglichkeiten der Erfindung ergeben sich aus der nachfolgenden Beschreibung eines Ausführungsbeispieles und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1:: Eine schematische Darstellung einer erfindungsgemäßen Schleifmaschine, und
- Fig. 2 I bis VI:: eine schematische Darstellung der Verfahrensschritte des erfindungsgemäßen Verfahrens.

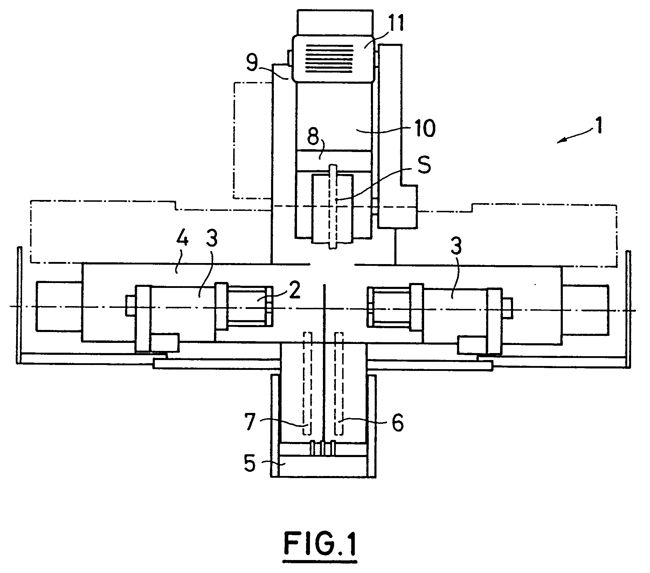

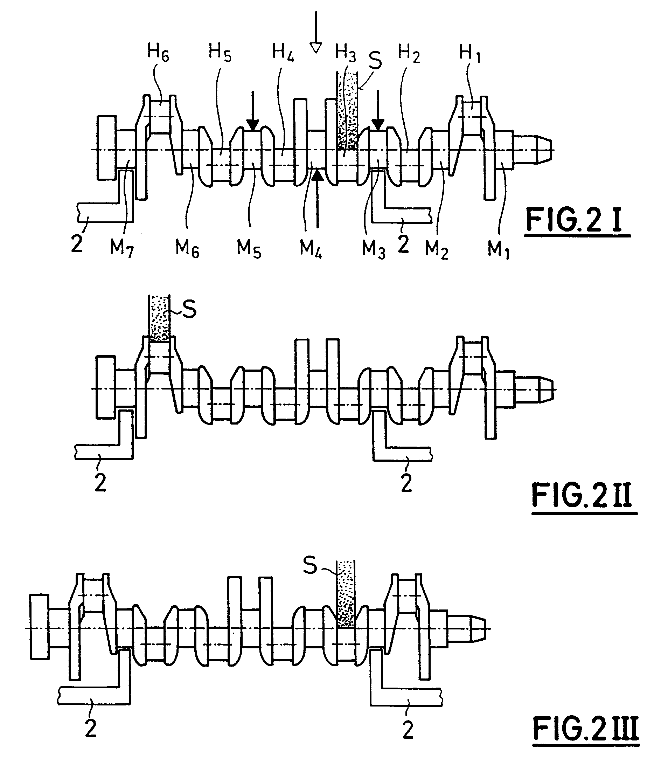

Gemäß Fig. 1 weist eine Schleifmaschine 1 zum Schleifen von Hublagerzapfen H₁...Hₙ einer Kurbelwelle K zwei an Werkstückspindelstöcken 3 drehend antreibbar gelagerten Einspannköpfe 2 zur Aufnahme der Kurbelwelle K auf. Die Werkstückspindelstöcke 3 sind auf einem Werkzeugtiscb 4 montiert, der in Axialrichtung verfahrbar, aber während des Schleifens hydraulisch festgeklemmt ist. Die Kurbelwelle K ist mittels einer einschwenkbaren Umsetzeinrichtung 5 in die Einspannköpfe 2 einlegbar, in verschiedene axial gegeneinander versetzte Einspannlagen umsetzbar und aus den Einspannköpfen 2 heraushebbar.

Nach einer durch die Einspannköpfe 2 und die bereits vorhandenen Mittellager M₁...Mₙ₊₁ bestimmten Grobpositionierung beim Einlegen bzw. Umsetzen der Kurbelwelle K mittels der Umsetzeinrichtung 5 erfolgt eine Feinjustierung der Kurbelwelle K gegenüber einer rotierbar gelagerten an die Kurbelwelle K radial zustellbaren Schleifscheibe S über eine Axialpositioniereinrichtung 6 mit einer integrierten Durchmessermeßeinrichtung 6 zum automatischen Erfassen des Durchmessers des Hublagerzapfens H₁...Hₙ während des Schleifvorgangs. Das Überführen des zu schleifenden Hublagerzapfens H₁...Hₙ in die richtige Schleifdrehlage der Kurbelwelle K relativ zu ihrer Einspannung erfolgt über eine Teilvorrichtung7, die den zu schleifenden Hublagerzapfen H₁...Hₙ radial von außen erfaßt und in die Drehmitte der Einspannstücke 2 überführt. Als Referenz wird dabei der ggf. bereits geschliffene erste Hublagerzapfen H₁...Hₙ verwendet.

Das Profil der Schleifscheibe S wird während des Schleifprozesses in zyklischen Abständen durch eine automatische Abrichteinrichtung 8 bearbeitet und die vorgegebene Geometrie wieder hergestellt. Die Schleifscheibe S ist zusammen mit der Abrichteinrichtung 8 an einem Schleifspindelstock 10 auf einem hinteren Maschinenbett 9 angeordnet und wird durch einen Schleifspindelantrieb 11 angetrieben.

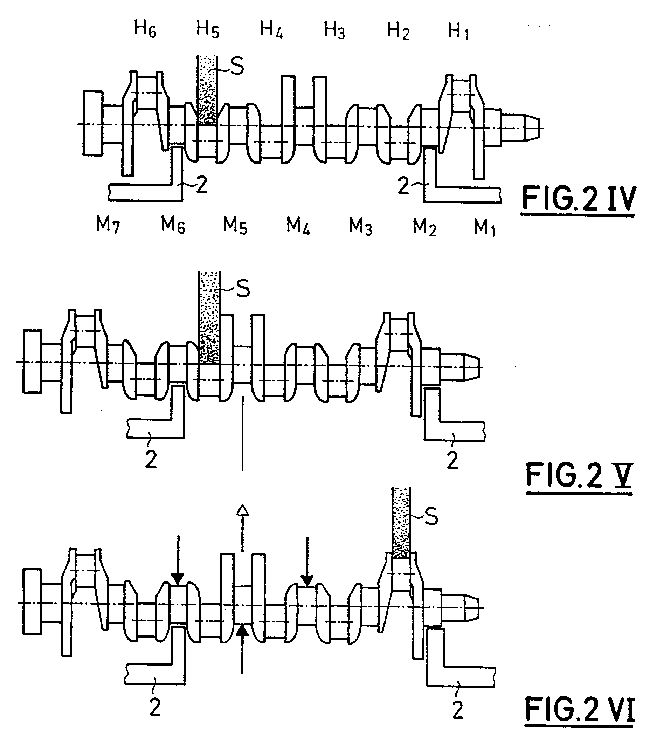

Anhand der Fig. 2 I-VI wird nun das erfindungsgemäße Verfahren am Beispiel einer sechshubigen Kurbelwelle K beschrieben. Die Kurbelwelle K wird von der Umsetzeinrichtung 5 an den drei Mittellagern M₃, M₄, M₅ eingeklemmt und in die Einspannköpfe 2 der Werkstückspindelstöcke 3 eingelegt. Dabei wird sichergestellt, daß sich die Kurbelwelle K nach dem Laden radial in einer definierten Lage zur Teilvorrichtung 7 befindet. Die korrekte radiale Position wird von einer Lichtschranke überwacht, die bei Fehllage der Kurbelwelle K eine Fehlermeldung abgibt. Die grobe Position beim Einlegen der Kurbelwelle K wird radial durch die Umsetzeinrichtung 5 und axial durch die Breite der Einspannköpfe 2 sowie der Mittellagerzapfen M₁...M bestimmt. Während des Einlegens, beim Umlegen und beim Teilen werden die Einspannköpfe 2 fixiert. Dazu rasten hydraulisch angesteuerte Stifte in Aussparungen von Planscheiben und Verhindern eine Verdrehung der Einspannköpfe 2. Beim Teilen wird dadurch die Übertragung des Teilungswinkels gesichert.

Zum Schleifen der sechshubigen Kurbelwelle K wird diese zunächst derart in die Einspannköpfe 2 eingelegt, daß der eine äußerste Mittellagerzapfen M₇ und der eine mittlere Mittellagerzapfen M₃ in den Einspannköpfen 2 einspannbar sind, so daß die vier Hublagerzapfen H₃...H₆ zwischen den Einspannstellen liegen. Zunächst werden nur die unmittelbar innen neben den der Einspannung dienenden Mittellagerzapfen M₃ und M₇ liegenden Hublagerzapfen H₃ und H₆ geschliffen (Fig. 2 I und 2 II). Durch zweimaliges axiales Umsetzen der Kurbelwelle K um jeweils einen Mittenabstand der Hublagerzapfen H₁...Hₙ bzw. Mittellagerzapfen M₁...Mₙ₊₁ sind die Hublagerzapfen H₂ und H₅ (Fig. 2 III und Fig. 2 IV) sowie H₄ und H₁ (Fig. 2 V und 2 VI) schleifbar.

Nach dem Einlegen der Kurbelwelle K in der ersten Einspannlage (Fig. 2 I und 2 II) in die Einspannköpfe 2 (von welchen in der schematischen Darstellungen von Fig. 2 nur die unteren Spannschalen dargestellt sind) erfolgt das Teilen am Hublagerzapfen H₃. Dabei fährt der Werkzeugtisch 4 bezüglich des Hublagerzapfens H₃ in Teilposition und es greift die parallel zur Drehachse liegende Teileinrichtung 7 durch Einschwenken in den Arbeitsbereich radial von außen an dem zu schleifenden Hublagerzapfen H₃ an und dreht diesen in die Drehmitte der Einspannköpfe 2. Nach dem Verfahren des Werkstücktisches 4 bezüglich des Hublagerzapfens H₃ in Schleifposition folgt das Schleifen (Fig. 2 I), wobei der Schleifspindelstock 10 die rotierend angetriebene Schleifscheibe S zunähst im Eilgang bis zu einer ersten Vorposition an die Kurbelwelle K heranfährt. Dann wird die Zustellgeschwindigkeit der Schleifscheibe S reduziert, der Hublagerzapfen H₃ unter Drehen der Kurbelwelle K mittels der angetriebenen Spannköpfe 2 angeschliffen und der Meßtaster der Durchmessermeßeinrichtung 6 an den zu schleifenden Hublagerzapfen H₃ angelegt. Die Durchmessermessung erfolgt während des Schleifprozesses, so daß eine ständige Überwachung und Steuerung desselben möglich ist, Der Hublagerzapfen H₃ wird bis zum Schlichtmaß geschruppt. Dann wird die Zustellgeschwindigkeit der Schleifscheibe S in mehreren Stufen reduziert, bis der Fertigdurchmesser erreicht ist. Die Kurbelwellendrehzahl wird dabei an die Zustellgeschwindigkeit angepaßt. Nach Erreichen des Fertigdurchmessers fährt der Schleifspindelstock 10 mit der Schleifscheibe S im Eilgang in die Ausgangsstellung zurück und die Durchmessermeßeinrichtung 6 schwenkt von dem geschliffenen Hublagerzapfen H₃ nach außen.

Nun erfolgt die Bearbeitung des der anderen Einspannstelle der ersten Einspannlage der Kurbelwelle K benachbarten Hublagerzapfens H₆. Dazu wird der Werkstücktisch 4 mit der Kurbelwelle K in Teilposition gefahren, die Kurbelwelle K, wie oben beschrieben, an dem geschliffenen Hublagerzapfen H₃ geteilt und der Werkstücktisch 4 mit dem zu schleifenden Hubzapfenlager H₆ anschließend in Schleifposition bewegt. Dann wird auch der HublagerzapfenH₆ in der oben beschriebenen Art und Weise geschliffen (Fig. 2 II),

Als nächstes wird die Kurbelwelle K mittels der Umsetzeinrichtung 5 aus den Einspannköpfen 2 herausgehoben, der Werkstücktisch 4 verfährt um einen Mittenabstand zweier benachbarter Hublagerzapfen H₁...Hₙ bzw. Mittellagerzapfen M₁...Mₙ₊₁ axial relativ zu der Kurbelwelle K nach rechts und die Kurbelwelle K wird von der Umsetzeinrichtung 5 in der nun zweiten axialen Einspannlage wieder in die Einspannköpfe 2 abgelegt. Erneut erfolgt ein Teilen in einer Weise, wie oben beschrieben, am Hublagerzapfen H₃ (Fig. 2 III), und Schleifen der Hublagerzapfen H₂ und H₅.

Nach einem erneuten Versetzen der Kurbelwelle K um einen Mittenabstand zweier benachbarter Hublagerzapfen H₁...Hₙ relativ zu den Einspannköpfen 2 durch Verfahren des Werkstücktisches 4 relativ zu der Kurbelwelle K nach rechts erfolgt auf die gleiche Weise das Teilen und Schleifen der Hublagerzapfen H₄ (Fig. 2 V) und H₁ (Fig. 2 VI).

Nach Bearbeitung des letzten Hublagerzapfens H₁...Hₙ wird der Werkstücktisch 4 in die Entladeposition gefahren. Die fertige Kurbelwelle K wird mit der Umsetzvorrichtung 5 aus dem Arbeitsraum entnommen und die Schleifmaschine 1 ist zum erneuten Beladen mit einer zu schleifenden Kurbelwelle K bereit.

Auf gleiche Weise lassen sich auch Kurbelwellen K mit geringerer oder größerer Anzahl von Hublagerzapfen H₁...Hₙ in der erfindungsgemäßen Folge und mit der erfindungsgemäßen Schleifmaschine schleifen.

### Bezugszeichenliste:

- 1: Schleifmaschine
- 2: Einspannköpfe
- 3: Werkstückspindelstöcke
- 4: Werkstücktisch
- 5: Umsetzeinrichtung
- 6: Axialpositionier-/Durchmessermeßeinrichtung
- 7: Teileinrichtung
- 8: Abrichteinrichtung
- 9: Maschinenbett
- 10: Schleifspindelstock
- 11: Schleifspindelantrieb
- K: Kurbelwelle
- S: Schleifscheibe
- H₁...Hₙ: Hublagerzapfen
- M₁...Mₙ₊₁: Mittellagerzapfen

## Patentansprüche

1. Verfahren zum aufeinanderfolgenden Schleifen von Hublagerzapfen (H₁...Hₙ) einer Kurbelwelle (K) mittels einer Schleifeinrichtung, bspw. einer rotierenden Schleifscheibe (S), bei welchem die an zwei im Abstand befindlichen Mittellagerzapfen (M₁...Mₙ₊₁₎) eingespannte Kurbelwelle (K) um die Achse des jeweils zu schleifenden Hublagerzapfens (H₁...Hₙ) gedreht wird, dadurch gekennzeichnet, daß in unterschiedlichen, je um den Mittenabstand zweier benachbarter Hublagerzapfen (H₁...Hₙ) bzw. Mittellagerzapfen (M₁...Mₙ₊₁) bzw. eines Vielfachen davon axial gegeneinander versetzten Einspannlagen der Kurbelwelle (K) jeweils nur die den der Einspannung dienenden Mittellagerzapfen (M₁...Mₙ₊₁) unmittelbar benachbarten Hublagerzapfen (H₁...Hₙ) geschliffen werden, und daß der Abstand der zwei Einspannstellen der Kurbelwelle (K) in den unterschiedlichen Einspannlagen konstant gehalten wird.

2. Verfahren nach Anspruch 1, dadurch gekennzeichnet, daß in einer Einspannlage der Kurbelwelle (K) jeweils zwei Hublagerzapfen (H₁...Hₙ) geschliffen werden.

3. Verfahren nach Anspruch 1 oder 2, dadurch gekennzeichnet, daß die Kurbelwelle (K) nach einer ersten Einspannlage axial um den Mittenabstand zweier benachbarter Hublagerzapfen (H₁...Hₙ) bzw. Mittellagerzapfen (M₁...Mₙ₊₁) in eine weitere Einspannlage axial umgesetzt wird.

4. Verfahren nach einem der Ansprüche 1 bis 3, dadurch gekennzeichnet, daß die Kurbelwelle (K) nach Grobpositionierung durch Einlegen in die erste Einspannlage bzw. Umsetzen in eine weitere Einspannlage axial bezüglich der Schleifscheibe (S) justiert wird.

5. Verfahren nach einem der Ansprüche 1 bis 4, dadurch gekennzeichnet, daß die Kurbelwelle (K) nach Grobpositionierung durch Einlegen in die erste Einspannlage bzw. Umsetzen in eine weitere Einspannlage radial bezüglich der jeweiligen Drehachse justiert wird.

6. Verfahren nach einem der Ansprüche 1 bis 5, dadurch gekennzeichnet, daß die axiale Einspannlage der Kurbelwelle (K) an den Schultern des jeweils zu schleifenden Hublagerzapfens (H₁...Hₙ) abgetastet wird.

7. Verfahren nach einem der Ansprüche 1 bis 6, dadurch gekennzeichnet, daß die Kurbelwelle (K) nach Einlegen in die erste Einspannlage in die - bezogen auf den ersten zu schleifenden Hublagerzapfen (H₁...Hₙ) - richtige Drehlage überführt (geteilt) und vor dem Schleifen des jeweils weiteren Hublagerzapfens (H₁...Hₙ) durch Vergleich mit dem zuerst geschliffenen Hublagerzapfen (H₁...Hₙ) in die richtige Drehlage Überführt (geteilt) wird.

8. Verfahren nach einem der Ansprüche 1 bis 7, dadurch gekennzeichnet, daß die Schleifscheibe (S) zunächst im Eilgang in eine Vorposition an die Kurbelwelle (K) herangefahren, dann die Zustellgeschwindigkeit vom Anschleifen des Hublagerzapfens (H₁...Hₙ) stufenweise bis zum Fertigdurchmesser des Hublagerzapfens (H₁...Hₙ) reduziert und zuletzt die Schleifscheibe (S) im Eilgang in die Ausgangsstellung zurückgeführt wird.

9. Verfahren nach Anspruch 8, dadurch gekennzeichnet, daß die Kurbelwelle (K) in Anpassung an die Zustellgeschwindigkeit der Schleifscheibe (S) mit unterschiedlicher Drehzahl gedreht wird.

10. Verfahren nach einem der Ansprüche 1 bis 9, dadurch gekennzeichnet, daß die Kurbelwelle (K) zum Einlegen und axialen Umsetzen von einer Einspannlage in die nächste an drei Mittellagerzapfen (M₁...Mₙ₊₁) eingeklemmt wird.

11. Verfahren nach einem der Ansprüche 1 bis 10, dadurch gekennzeichnet, daß die Schleifscheibe (S) während des Schleifprozesses in zyklischen Abständen zur Wiederherstellung der vorgegebenen Geometrie des Schleifscheibenprofils abgerichtet wird.

12. Schleifmaschine, insbesondere zur Durchführung eines Verfahrens nach einem der Ansprüche 1 bis 11 , mit zwei im Abstand zweier einzuspannender Mittellagerzapfen (M₁...Mₙ₊₁) um die jeweilige Achse des zu schleifenden Hublagerzapfens (H₁...Hₙ) drehbar angeordneten Einspannköpfen (2) und einer Schleifeinrichtung, bspw. einer rotierbar gelagerten, an die zu schleifenden Hublagerzapfen (H₁...Hₙ) zustellbaren Schleifscheibe (S), dadurch gekennzeichnet, daß die Einspannköpfe (2) in festen oder fest einstellbarem Abstand voneinander auf einem Werkstücktisch (4) angeordnet sind, welcher in jeder Einspannlage der Kurbelwelle (K) axial zu der Schleifscheibe (S) in eine Position verstellbar ist, in welcher die Schleifscheibe (S) einem der Einspannung dienenden Mittellagerzapfen (M₁...Mₙ₊₁) unmittelbar benachbarten Hublagerzapfen (H₁...Hₙ) zuordenbar ist und mit einer Einrichtung (5) zum axialen Umsetzen der Kurbelwelle (K) aus den beiden Einspannköpfen (2) von einer ersten Einspannlage um wenigstens den Mittelabstand zweier benachbarter Hublagerzapfen (H₁...Hₙ) bzw. Mittellagerzapfen (M₁...Mₙ₊₁) in eine weitere Einspannlage der Kurbelwelle (K).

13. Schleifmaschine nach Anspruch 12 für eine Kurbelwelle (K) mit n Hublagerzapfen (H₁...Hₙ) und n+1 Mittellagerzapfen (M₁...Mₙ₊₁), dadurch gekennzeichnet, daß der Mittenabstand der Einspannköpfe (2) dem 1- bis (n-1) -fachen Abstand zweier benachbarter Hublagerzapfen (H₁...Hₙ) bzw. Mittellagerzapfen (M₁...Mₙ₊₁) entspricht.

14. Schleifmaschine nach Anspruch 12 oder 13, gekennzeichnet durch eine Einrichtung (5) zum axialen Umsetzen der Kurbelwelle (K) aus einer ersten Einspannlage um wenigstens den Mittenabstand zweier benachbarter Hublagerzapfen (H₁...Hₙ) bzw. Mittellagerzapfen (M₁...Mₙ₊₁) in eine weitere Einspannlage der Kurbelwelle (K).

15. Schleifmaschine nach Anspruch 14, dadurch gekennzeichnet, daß die Umsetzeinrichtung (5) die Kurbelwelle (K) zwischen drei Mittellagerzapfen (M₁...Mₙ₊₁) einklemmend erfaßt.

16. Schleifmaschine nach Anspruch 14 oder 15, dadurch gekennzeichnet, daß die Umsetzeinrichtung (5) dem Einlegen der Kurbelwelle (K) in die erste Einspannlage und dem Ausheben der Kurbelwelle (K) aus der letzten Einspannlage dient.

17. Schleifmaschine nach einem der Ansprüche 12 bis 16, dadurch gekennzeichnet, daß die axiale Einspannlage der Kurbelwelle (K) grob durch die Einspannköpfe (2) und die Mittellagerzapfen (M₁...Mₙ₊₁) bestimmt und mittels einer Axialpositioniereinrichtung (6) einjustierbar ist.

18. Schleifmaschine nach Anspruch 17, dadurch gekennzeichnet, daß die Axialpositioniereinrichtung (6) die axiale Einspannlage der Kurbelwelle (K) an den Schultern des zu schleifenden Hublagerzapfens (H₁...Hₙ) abtastet und die Kurbelwelle (K) durch Verfahren des Werkstücktisches (4) axial feinpositioniert.

19. Schleifmaschine nach einem der Ansprüche 16 bis 18, dadurch gekennzeichnet, daß die Kurbelwelle (K) mittels der Umsetzeinrichtung (5) in eine definierte Drehlage bezüglich des ersten zu schleifenden Hublagerzapfens (H₁...Hₙ) in die erste Einspannlage einlegbar ist.

20. Schleifmaschine nach Anspruch 19, dadurch gekennzeichnet, daß die radiale Einspannlage der Kurbelwelle (K) mittels einer Kontrolleinrichtung überwachbar ist.

21. Schleifmaschine nach einem der Ansprüche 12 bis 20, gekennzeichnet durch eine Teileinrichtung (7) welche an dem zu schleifenden Hublagerzapfen (H₁...Hₙ) angreift und die Kurbelwelle (K) bezüglich des zu schleifenden Hublagerzapfens (H₁...Hₙ) in Schleifposition dreht.

22. Schleifmaschine nach Anspruch 21, dadurch gekennzeichnet, daß für die Einjustierung der Schleifposition eines Hublagerzapfens (H₁...Hₙ) der zuerst geschliffene Hublagerzapfen (H₁...Hₙ) als Referenz dient.

23. Schleifmaschine nach einem der Ansprüche 12 bis 22, gekennzeichnet durch eine Einrichtung zum radialen Zustellen der Schleifscheibe (S) an die eingespannte Kurbelwelle (K) mit unterschiedlichen Geschwindigkeiten.

24. Schleifmaschine nach einem der Ansprüche 12 bis 23, dadurch gekennzeichnet, daß die Kurbelwelle (K) mit unterschiedlichen Drehzahlen antreibbar ist.

25. Schleifmaschine nach einem der Ansprüche 12 bis 24, gekennzeichnet durch eine Einrichtung (8) zum Abrichten der Schleifscheibe (S).

26. Schleifmaschine nach einem der Ansprüche 12 bis 25, gekennzeichnet durch eine Einrichtung (6) für die Messung des Durchmessers eines Hublagerzapfens (H₁...Hₙ) während des Schleifens.

27. Schleifmaschine nach einem der Ansprüche 12 bis 26, dadurch gekennzeichnet, daß die Durchmessermeßeinrichtung (6) die Axialpositioniereinrichtung (6), die Umsetzeinrichtung (5) und/oder die Teileinrichtung (7) mittels Schwenkschlitten aus einer zurückgezogenen Wartestellung in Arbeitsstellung an der Kurbelwelle (K) überführbar sind/ist.

28. Schleifmaschine nach einem der Ansprüche 12 bis 27, dadurch gekennzeichnet, daß der Werkzeugtisch (4) während des Schleifens, vorzugsweise hydraulisch, festklemmbar ist.

29. Schleifmaschine nach einem der Ansprüche 12 bis 28, dadurch gekennzeichnet, daß während des Einlegens, des Umsetzens und/oder des Teilens der Kurbelwelle (K) die Einspannköpfe (2) fixierbar sind.

30. Schleifmaschine nach einem der Ansprüche 12 bis 29, dadurch gekennzeichnet, daß die Einspannung der Kurbelwelle (K) während des Teilens lösbar ist.

31. Schleifmaschine nach einem der Ansprüche 12 bis 30, gekennzeichnet durch eine numerische Steuerung (CNC).

## Claims

1. A process for the successive grinding of stroke bearing-journals (H₁...Hₙ) of a crankshaft (K) by means of a grinding device, for example a rotating grinding-wheel (S), in which process the crankshaft (K), clamped on two spaced centre bearing-journals (M₁...Mₙ₊₁), is turned about the axis of whichever stroke bearing-journal (H₁...Hₙ) is to be ground, characterised in that, in each case, only those stroke bearing-journals (H₁...Hₙ) are ground which are directly next to the centre bearing-journals (M₁...Mₙ₊₁) used for the clamping, in different clamping positions of the crankshaft (K) which are axially offset in relation one to another by the distance between the centres of two neighbouring stroke bearing-journals (H₁...Hₙ) or centre bearing-journals (M₁...Mₙ₊₁) or a multiple thereof, and in that the distance between the two clamping points of the crankshaft (K) is kept constant in the different clamping positions.

2. A process according to Claim 1, characterised in that, in one clamping position of the crankshaft (K), two stroke bearing-journals (H₁...Hₙ) are ground in each case.

3. A process according to Claim 1 or 2, characterised in that the crankshaft (K), after a first clamping position, is axially moved into a further clamping position by the distance between the centres of two neighbouring stroke bearing-journals (H₁...Hₙ) or centre bearing-journals (M₁...Mₙ₊₁).

4. A process according to any one of Claims 1 to 3, characterised in that the crankshaft (K), after rough positioning by being inserted into the first clamping position or by being moved into a further clamping position, is adjusted axially in relation to the grinding wheel (S).

5. A process according to any one of Claims 1 to 4, characterised in that the crankshaft (K), after rough positioning by being inserted into the first clamping position or being moved into a further clamping position, is adjusted radially in relation to the relevant axis of rotation.

6. A process according to any one of Claims 1 to 5, characterised in that the axial clamping position of the crankshaft (K) is traced using the shoulders of whichever stroke bearing-journal (H₁...Hₙ) is to be ground.

7. A process according to any one of Claims 1 to 6, characterised in that the crankshaft (K), after insertion into the first clamping position, is transferred (indexed) into that position of rotation which is correct in relation to the stroke bearing-journal (H₁...Hₙ) which is to be ground first, and, before the grinding of the relevant further stroke bearing-journal (H₁...Hₙ), is transferred (indexed) into the correct position of rotation by comparison with the stroke bearing-journal (H₁...Hₙ) which has been ground first.

8. A process according to any one of Claims 1 to 7, characterised in that the grinding-wheel (S) is first advanced in fast motion to the crankshaft (K) into a preliminary position, then the delivery speed is reduced by stages from the initial grinding of the stroke bearing-journal (H₁...Hₙ) up to the finished diameter of the stroke bearing-journal (H₁...Hₙ), and finally the grinding wheel (S) is brought back in fast motion into the starting position.

9. A process according to Claim 8, characterised in that the crankshaft (K) is turned at different numbers of revolutions in adaptation to the delivery speed of the grinding-wheel (S).

10. A process according to any one of Claims 1 to 9, characterised in that the crankshaft (K), for the purpose of insertion and axial moving from one clamping position into the next, is wedged against three centre bearing-journals (M₁...Mₙ₊₁).

11. A process according to any one of Claims 1 to 10, characterised in that the grinding-wheel (S) is trued during the grinding process at cyclic intervals in order to restore the given geometry of the grinding-wheel profile.

12. A grinding machine, in particular for carrying out a process according to any one of Claims 1 to 11, with two clamping heads (2) arranged so as to be rotatable about the axis of whichever stroke bearing-journal (H₁...Hₙ) is to be ground, and arranged at the spacing of two centre bearing-journals (M₁...Mₙ₊₁) which are to be clamped; and a grinding device, for example a grinding-wheel (S) rotatably mounted and deliverable to the stroke bearing-journals (H₁...Hₙ) which are to be ground, characterised in that the clamping heads (2) are arranged at a fixed or fixedly settable distance from each other on a work-table (4) which can, in every clamping position of the crankshaft (K), be shifted axially to the grinding-wheel (S) into a position in which the grinding-wheel (S) can be assigned to a stroke bearing-journal (H₁..Hₙ) directly next to the centre bearing-journal (M₁...Mₙ₊₁) used for the clamping, and with a device (5) for axially moving the crankshaft (K) out of the two clamping heads (2) from a first clamping position, by at least the distance between the centres of two neighbouring stroke bearing-journals (H₁...H₂) or centre bearing-journals (M₁...Mₙ₊₁), into a further clamping position of the crankshaft (K).

13. A grinding machine according to Claim 12 for a crankshaft (K) with n stroke bearing-journals (H₁...Hₙ) and n+1 centre bearing-journals (M₁...Mₙ₊₁), characterised in that the distance between the centres of the clamping heads (2) is 1 to n-1 times the distance between two neighbouring stroke bearing-journals (H₁...Hₙ) or centre bearing-journals (M₁...Mₙ₊₁).

14. A grinding machine according to Claim 12 or 13, characterised by a device (5) for axially moving the crankshaft (K) out of a first clamping position, by at least the distance between the centres of two neighbouring stroke bearing-journals (H₁...Hₙ) or centre bearing-journals (M₁...Mₙ₊₁), into a further clamping position of the crankshaft (K).

15. A grinding machine according to Claim 14, characterised in that the moving device (5) grasps the crankshaft (K), wedging it between three centre bearing-journals (M₁...Mₙ₊₁).

16. A grinding machine according to Claim 14 or 15, characterised in that the moving device (5) serves to insert the crankshaft (K) into the first clamping position and to lift the crankshaft (K) out of the last clamping position.

17. A grinding machine according to any one of Claims 12 to 16, characterised in that the axial clamping position of the crankshaft (K) is roughly determined by the clamping heads (2) and the centre bearing-journals (M₁...Mₙ₊₁) and is adjustable by means of an axial positioning device (6).

18. A grinding machine according to Claim 17, characterised in that the axial positioning device (6) traces the axial clamping position of the crankshaft (K), using the shoulders of the stroke bearing-journal (H₁...Hₙ) to be ground, and precisely positions the crankshaft (K) axially by traversing the work-table (4).

19. A grinding machine according to any one of Claims 16 to 18, characterised in that the crankshaft (K) can be inserted into the first clamping position by means of the moving device (5) into a defined rotary position in relation to the first stroke bearing-journal (H₁...Hₙ) to be ground.

20. A grinding machine according to Claim 19, characterised in that the radial clamping position of the crankshaft (K) can be monitored by means of a checking device.

21. A grinding machine according to any one of Claims 12 to 20, characterised by an indexing device (7) which acts on the stroke bearing-journal (H₁...Hₙ) to be ground, and turns the crankshaft (K) into a grinding position in relation to the stroke bearing-journal (H₁...Hₙ) to be ground.

22. A grinding machine according to Claim 21, characterised in that the stroke bearing-journal (H₁...Hₙ) which has been first ground serves as a reference for adjusting the grinding position of a stroke bearing-journal (H₁...Hₙ).

23. A grinding machine according to any one of Claims 12 to 22, characterised by a device for radially delivering the grinding-wheel (S) to the clamped crankshaft (K) at different speeds.

24. A grinding machine according to any one of Claims 12 to 23, characterised in that the crankshaft (K) can be driven at different numbers of revolutions.

25. A grinding machine according to any one of Claims 12 to 24, characterised by a device (8) for truing the grinding-wheel (S).

26. A grinding machine according to any one of Claims 12 to 25, characterised by a device (6) for measuring the diameter of a stroke bearing-journal (H₁...Hₙ) during grinding.

27. A grinding machine according to any one of Claims 12 to 26, characterised in that the diameter-measuring device (6), the axial positioning device (6), the moving device (5) and/or the indexing device (7) can be transferred by means of swivel carriages from a withdrawn waiting position into a working position on the crankshaft (K).

28. A grinding machine according to any one of Claims 12 to 27, characterised in that the work-table (4) can be wedged, preferably hydraulically, during grinding.

29. A grinding machine according to any one of Claims 12 to 28, characterised in that the clamping heads (2) can be fixed during insertion, moving and/or indexing of the crankshaft (K).

30. A grinding machine according to any one of Claims 12 to 29, characterised in that the clamping of the crankshaft (K) can be released during indexing.

31. A grinding machine according to any one of Claims 12 to 30, characterised by a numerical control system (CNC).

## Revendications

1. Procédé pour rectifier successivement des manetons (H₁... Hₙ) d'un vilebrequin (K) à l'aide d'un dispositif de rectification, par exemple à l'aide d'une meule de rectification (S) tournante, dans lequel le vilebrequin (K) qui est bridé au niveau de deux tourillons (M₁...Mₙ₊₁), espacés l'un de l'autre, tourne autour de l'axe du maneton (H₁...Hₙ) à rectifier, caractérisé en ce que dans différentes positions de bridage du vilebrequin (K) qui sont décalées axialement les unes par rapport aux autres chaque fois de la valeur ou d'un multiple de la valeur de l'entraxe de deux manetons (H₁...Hₙ) consécutifs, on rectifie seulement les manetons (H₁...Hₙ) qui sont contigus aux tourillons (M₁...Mₙ₊₁) servant au bridage et en ce que l'on maintient constante la distance entre les deux points de bridage du vilebrequin (K) dans les différentes positions de bridage.

2. Procédé selon la revendication 1, caractérisé en ce qu'on rectifie chaque fois deux manetons (H₁...Hₙ) dans une position de bridage du vilebrequin (K).

3. Procédé selon la revendication 1 ou 2, caractérisé en ce qu'à la suite d'une première position de bridage, on déplace le vilebrequin (K) axialement, de la valeur de l'entraxe de deux manetons (H₁...Hₙ) ou torillons (M₁...Mₙ₊₁) consécutifs, pour l'amener dans une autre position de bridage.

4. Procédé selon l'une des revendications 1 à 3, caractérisé en ce qu'après avoir positionné de manière grossière le vilebrequin en plaçant celui-ci dans la première position de bridage ou en le déplaçant dans une autre position de bridage, on règle celui-ci axialement par rapport à la meule de rectification (S).

5. Procédé selon l'une des revendications 1 à 4, caractérisé en ce qu'après avoir positionné de manière grossière le vilebrequin en plaçant celui-ci dans la première position de bridage ou en le déplaçant dans une autre position de bridage, on règle celui-ci radialement par rapport à l'axe de rotation concerné.

6. Procédé selon l'une des revendications 1 à 5, caractérisé en ce que l'on palpe la position axiale de bridage du vilebrequin (K) au niveau des épaulements du maneton (H₁...Hₙ) à rectifier concerné.

7. Procédé selon l'une des revendications 1 à 6, caractérisé en ce qu'après mise en place du vilebrequin (K) dans la première position de bridage on amène le vilebrequin dans la position de rotation correcte - par rapport au premier maneton (H₁...Hₙ) à rectifier - et, avant la rectification du maneton (H₁...Hₙ) suivant, on amène le vilebrequin dans la position de rotation correcte par comparaison avec le premier maneton (H₁... Hₙ) rectifié.

8. Procédé selon l'une des revendications 1 à 7, caractérisé en ce que l'on approche la meule de rectification (S) du vilebrequin (K) tout d'abord à vitesse élevée jusque dans une position de départ puis on réduit graduellement la vitesse d'avance depuis le début de la rectification du maneton (H₁...Hₙ) jusqu'à l'obtention du diamètre final du maneton (H₁ ...Hₙ) et on ramène la meule de rectification (S) à vitesse élevée dans sa position de départ.

9. Procédé selon la revendication 8, caractérisé en ce que l'on fait tourner le vilebrequin (K) à différentes vitesses adaptées en fonction de la vitesse d'avance de la meule de rectification (S).

10. Procédé selon l'une des revendications 1 à 9, caractérisé en ce que pour la mise en place et le déplacement axial du vilebrequin (K) d'une position de bridage dans la suivante, on serre celui-ci au niveau de trois tourillons (M₁...Mₙ₊₁).

11. Procédé selon l'une des revendications 1 à 10, caractérisé en ce que l'on dresse la meule (S) à intervalles cycliques pendant le processus de rectification aux fins de rétablir la géométrie prédéterminée du profil de la meule.

12. Rectifieuse, en particulier pour la mise en oeuvre du procédé selon l'une des revendications 1 à 11, avec deux têtes de bridage (2) espacées de la distance séparant deux tourillons (M₁...Mₙ₊₁) et montées tournantes autour de l'axe du maneton (H₁...Hₙ) à rectifier et un dispositif de rectification, par exemple une meule (S) tournante pouvant être approchée du maneton (H₁...Hₙ) à rectifier, caractérisée en ce que les têtes de bridage (2) sont disposées à distance fixe ou à distance fixe réglable l'une de l'autre sur une table (4) porte-pièce qui, dans toutes les positions de bridage du vilebrequin (K), peut être déplacée axialement par rapport à la meule (S), dans une position dans laquelle la meule (S) peut être associée à un maneton (H₁...Hₙ) contigu du tourillon (M₁...Mₙ₊₁) servant au bridage et avec un dispositif (5) pour déplacer axialement le vilebrequin (K) reposant dans les deux têtes de bridage (2), d'au moins la valeur de l'entraxe de deux manetons (H₁...Hₙ) ou tourillons (M₁...Mₙ₊₁) consécutifs depuis une première position de bridage vers une autre position de bridage du vilebrequin (K).

13. Rectifieuse selon la revendication 12 pour un vilebrequin (K) à n manetons (H₁...Hₙ) et n+1 tourillons (M₁...Mₙ₊₁), caractérisée en ce que l'entraxe des têtes de bridage (2) correspond à 1 fois à (n-1) fois la distance entre deux manetons (H₁...Hₙ) ou tourillons (M₁...Mₙ₊₁) consécutifs.

14. Rectifieuse selon la revendication 12 ou 13, caractérisée par un dispositif (5) pour déplacer axialement le vilebrequin (K) d'au moins la valeur de l'entraxe de deux manetons (H₁...Hₙ) et n+1 tourillons (M₁... Mₙ₊₁), d'une première position de bridage dans une autre position de bridage du vilebrequin (K).

15. Rectifieuse selon la revendication 14, caractérisée en ce que le dispositif (5) de déplacement saisit le vilebrequin (K) entre trois tourillons (M₁...Mₙ₊₁).

16. Rectifieuse selon la revendication 14 ou 15, caractérisée en ce que le dispositif (5) de déplacement sert à la mise en place du vilebrequin (K) dans la première position de bridage et à l'enlèvement dudit vilebrequin (K) dans la dernière position de bridage.

17. Rectifieuse selon l'une des revendications 12 à 16, caractérisée en ce que la position axiale de bridage du vilebrequin (K) est déterminée de manière grossière par les têtes de bridage (2) et les tourillons (M₁...Mₙ₊₁) et peut être réglée à l'aide d'un dispositif (6) de réglage axial de position.

18. Rectifieuse selon la revendication 17, caractérisée en ce que le dispositif (6) de réglage axial palpe la position axiale de bridage du vilebrequin (K) au niveau des épaulements du maneton (H₁...Hₙ) à rectifier et procède au réglage fin axial du vilebrequin par déplacement de la table (4) porte-pièce.

19. Rectifieuse selon l'une des revendications 16 à 18, caractérisée en ce que le vilebrequin (K) peut être déplacé à l'aide du dispositif de mise en place (5) dans une position de rotation définie par rapport au premier manetons (H₁...Hₙ) à rectifier, dans la première position de bridage .

20. Rectifieuse selon la revendication 19, caractérisée en ce que la position radiale de bridage du vilebrequin (K) peut être surveillée à l'aide d'un dispositif de contrôle.

21. Rectifieuse selon l'une des revendications 12 à 20, caractérisée par un dispositif diviseur (7) qui agit sur le maneton (H₁...Hₙ) à rectifier et amène par rotation le vilebrequin (K) en position de rectification en ce qui concerne le maneton (H₁...Hₙ) à rectifier.

22. Rectifieuse selon la revendication 21, caractérisée en ce que le maneton (H₁...Hₙ) rectifié en premier sert de référence pour le réglage de la position de rectification d'un maneton (H₁...Hₙ).

23. Rectifieuse selon l'une des revendications 12 à 22, caractérisée par un dispositif d'avance radiale, avec des vitesse d'avance variables de la meule de rectification (S) vers le vilebrequin (K) bridé.

24. Rectifieuse selon l'une des revendications 12 à 23, caractérisée en ce que le vilebrequin (K) peut être entraîné à des vitesses différentes.

25. Rectifieuse selon l'une des revendications 12 à 24, caractérisée par un dispositif (8) pour le dressage de la meule (S) de rectification.

26. Rectifieuse selon l'une des revendications 12 à 25, caractérisée par un dispositif (6) pour la mesure du diamètre d'un maneton (H₁...Hₙ) pendant la rectification.

27. Rectifieuse selon l'une des revendications 12 à 26, caractérisée en ce que le dispositif (6) de mesure du diamètre, le dispositif (6) deréglage axial de position, le dispositif de déplacement (5) et/ou le dispositif diviseur (7) peut/peuvent être amené(s) d'une position d'attente en retrait dans une position de travail, contre le vilebrequin (K), à l'aide d'un chariot pivotant.

28. Rectifieuse selon l'une des revendications 12 à 27, caractérisée en ce que la table (4) porte pièce peut être immobilisée, de préférence hydrauliquement, pendant la rectification.

29. Rectifieuse selon l'une des revendications 12 à 28, caractérisée en ce que les têtes de bridage (2) peuvent être bloquées pendant la mise en place, le déplacement et/ou le positionnement angulaire du vilebrequin (K).

30. Rectifieuse selon l'une des revendications 12 à 29, caractérisée en ce que le bridage du vilebrequin (K) peut être libéré pendant le positionnement.

31. Rectifieuse selon l'une des revendications 12 à 30, caractérisée par une commande numérique (CNC).
